# EUROPEAN PATENT SPECIFICATION

(11) **EP 0 382 407 B1**
(45) Date of publication and mention of the grant of the patent: **20.10.1993**
(21) Application number: 90301046.0
(22) Date of filing: 01.02.1990
(51) Int. Cl.: H01R 4/72

(54) **Dam for shield terminators**
Damm für Schirmanschlüsse
Barrage pour terminaux blindés

(30) Priority: 06.02.1989 US 307391
(43) Date of publication of application: 16.08.1990
(73) Proprietor: MINNESOTA MINING AND MANUFACTURING COMPANY, St. Paul, Minnesota 55133-3427 (US)
(72) Inventor: Spector, Robert J., c/o Minnesota Mining and, 33427 St. Paul, Minnesota 55133-3427 (US)
(74) Representative: Baillie, Iain Cameron

(56) References cited:
- EP-A- 0 133 371
- EP-A- 0 182 199
- FR-A- 2 451 116
- US-A- 3 312 772

## Description

### Background of the Invention

### 1. Field of the Invention

The present invention generally relates to electrical connectors and cable splicing, and more particularly to a heat-shrinkable shield terminator having a multilumen sealing ring.

### 2. Description of the Prior Art

There are presently available a wide variety of electrical couplers and splicing devices for connecting wires and cables in electrical systems. The subject invention relates to such a device primarily used in conjunction with coaxial cables.

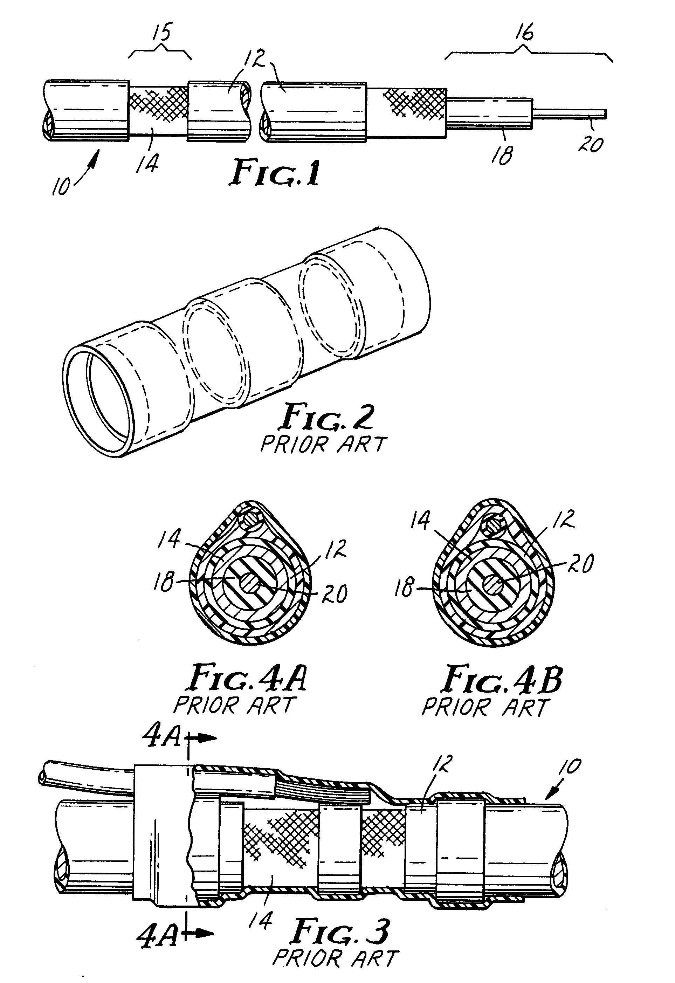

A typical coaxial cable (also known as a coax, coaxial transmission line, or concentric cable) has a central wire surrounded by an insulating layer, which is further surrounded by a conductive sheath or shield, and an insulating covering or jacket (see Figure 1). The conductive shield is usually connected to the electrical ground, whether it be earth ground, a chassis, or simply a common tie.

It is sometimes necessary to connect the ground shields of two or more coaxial cables together, often at a point along the coax where it is undesirable to completely cut through the cable. In such cases, a section of the outer jacket may be removed without cutting the remaining layers of the cable, thereby exposing the ground shield. One end of a ground lead wire may then be soldered to the ground shield and the other end connected to the second coax or other ground. Throughout the specification, the term "lead" in the phrase "ground lead wire" is meant in the verb sense, not as the metal lead (Pb). Similarly, the word "ground" is not to be taken in a limiting sense; as noted above, the lead wire may simply be connected to a common tie.

A problem arises, however, with respect to the exposed ground shield. If left bare, the ground wire may accidentally become detached, or environmental influences, particularly water, could corrode the shield, as well as affect the insulative ability of the layer surrounding the central wire. Also, when cables are so exposed in the presence of water (such as underground cables after a rain), the water may seep in between the outer jacket and the inner insulating layer, where it is then conveyed down the cable, sometimes for hundreds of feet. If openings in the inner insulating layer exist, even as small as a pinhole, the water will create a resistive fault in the cable. Even if there are no flaws in the insulating layer, the presence of water will still create a capacitive fault, and alter the impedance characteristics of the coax. Such defects can become critical in certain situations, such as in airborne equipment or combat vehicles.

It is, therefore, necessary to provide an environmental seal around the exposed area of cable. Devices for this purpose are known in the art, and are generally a protective sleeve. They are cylindrical in shape, and are usually constructed of a thermoelastic, or heat-shrinkable material. In this manner, the sleeve may be loosely fitted around the exposed section of cable and heat applied, resulting in a tight seal about the shield ground.

Improved versions of the protective sleeve include a solder band placed midway along the sleeve, and two rings of sealing material, or dams, placed at each end of the sleeve (see Figure 2). This particular design, known generically as a shield terminator, is disclosed in U.S. Patent No. 3,312,772 issued to Raychem Corporation on April 4, 1967. Other related U.S. Patents are: No. 3,305,625 issued to R. Ellis; No. 3,316,343 issued to H. Sherlock; No. 3,396,460 issued to J. Wetmore; No. 3,525,799 issued to R. Ellis; No. 4,206,786 issued to J. Wetmore; and No. 4,341,921 issued to D. Simpson.

The shield terminator is slipped around the exposed portion of the cable shield, and the ground lead wire is inserted between the sleeve and dam material (Figure 3). When heat is applied, the solder melts, eliminating the separate step of soldering the ground lead wire to the ground sheath. At the same time, the sealing material becomes somewhat fluid and, as the thermoelastic material begins to shrink, the sealant should fill any gaps between the ground lead wire and the outer jacket of the cable. Notably, the above-referenced patent does not disclose use of the sealing material to protect against external influences, but rather contemplates use of the sealant only to keep the solder from flowing out of the protective sleeve. A detailed discussion of desirable performance characteristics and use of these shield terminators may be found in U.S. Department of Defense military specifications MIL-S-83519A, MIL-S-83519/1C and MIL-S-83519/2A.

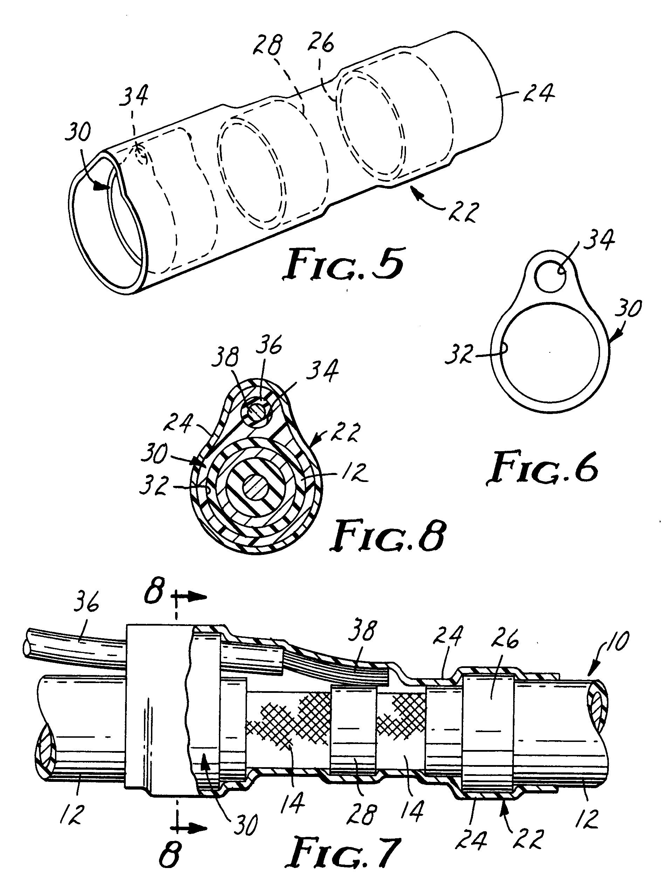

Unfortunately, however, the sealing material does not always completely fill the space between the ground lead wire and the outer jacket. Failures sometimes occur at interstices between the sleeve and the ground lead wire, above the dam, as illustrated in Figure 4A. Alternatively, if the ground lead wire is inserted between the dam material and the cable jacket, failures may occur adjacent to the jacket as shown in Figure 4B. Such failures completely nullify the effectiveness of the shield terminator, and may lead to catastrophic results under certain conditions. It would, therefore, be desirable and advantageous to devise a shield terminator having improved sealing means which overcomes this deficiency.

Accordingly, the primary object of the present invention is to provide a shield terminator for electrical wires and cables.

Another object of the invention is to provide such a device which has improved sealing means for protection against environmental influences.

Still another object of the invention is to provide a dam for a shield terminator which may be used to interconnect several wires or cables.

### Summary of the Invention

The foregoing objects are achieved in a shield terminator having at least one multilumen dam.

According to a first aspect of the present invention there is provided a device for encapsulating an exposed portion of a conductor in an insulated cable and a lead wire, comprising:
heat-shrinkable sleeve means for surrounding the exposed portion of the conductor, said sleeve means having first and second ends;
solder band means for electrically connecting the exposed portion of the conductor to the lead wire, said solder band means being within said sleeve means and positioned intermediate said first and second ends thereof: and
a first dam of thermoplastics material, characterised in that:
said first dam has at least two lumens, said first dam being positioned within said sleeve means proximate said first end thereof.

According to another aspect of the present invention there is provided a shield terminator for encapsulating an exposed portion of a shield in a coaxial cable and a lead wire adjacent to the exposed portion of the shield, the shield terminator comprising:
a thermoelastic heat shrinkable tubular sleeve having first and second ends;
a solder band positioned within said tubular sleeve intermediate said first and second ends; and
first and second dams of thermoplastics material positioned, respectively, at said first and second ends of said tubular sleeve, characterised by:
said first dam having at least two lumens therein for receiving the cable and the lead wire.

According to a further aspect of the present invention there is provided a dam for a shield terminator used to encapsulate an exposed portion of a conductor in an insulated cable and a lead wire adjacent to the exposed portion of the conductor, the dam comprising a ring of thermoplastics material and characterised by having first and second lumens therein, said first lumen having a diameter approximately equal to the diameter of the cable, and said lumen having a diameter approximately equal to the diameter of the lead wire.

According to a still further aspect of the present invention there is provided a method of manufacturing a shield terminator used to encapsulate an exposed portion of a conductor in an insulated cable, a lead wire being adjacent to the exposed portion of the conductor, comprising the steps of:
obtaining a heat-shrinkable sleeve member having first and second ends;
positioning a first dam member of thermoplastics material in said sleeve member proximate said first end;
inserting a solder band means in said sleeve member intermediate said first and second ends, characterised in that:
said first dam member has at least first and second lumens therein, said first lumen having a diameter approximately equal to the diameter of the cable and said second lumen having a diameter approximately equal to the diameter of the lead wire.

According to yet a further aspect of the present invention there is provided a method of using a thermoelastic shield terminator to connect an exposed portion of a conductor in an insulated cable to a terminal end of a lead wire, the shield terminator having at least one dam of thermoplastics material and fusible solder band means therein, comprising the steps of:
locating the fusible solder band means adjacent to the exposed portion of the conductor;
placing the terminal end of the lead wire proximate the fusible solder band means; and
heating the shield terminator until the fusible bonding means flows between the lead wire and the exposed portion of the conductor characterised by:
providing said dam as a multilumen dam;
prior to said locating step, positioning said shield terminator about said exposed portion of the conductor by inserting the cable through a first lumen of said dam; and
prior to said placing step, inserting said lead wire in a second lumen of said dam.

### Brief Description of the Drawings

The novel features of the invention are set forth in the appended claims. The invention itself, however, will best be understood by reference to the accompanying drawings, wherein:
Figure 1 is an elevational view of a coaxial cable with a portion of the outer insulating jacket removed, exposing the shield;
Figure 2 is a perspective view of the prior art shield terminator;
Figure 3 is a side elevational view with a partial cutout illustrating the prior art shield terminator with the ground lead wire inserted therein;
Figure 4A is a cross-sectional view taken along lines 4A-4A of Figure 3 showing failure points along the dam after heat has been applied to the shield terminator;
Figure 4B is similar to Figure 4A except that the ground lead wire has been placed under, rather than over, the dam;
Figure 5 is a perspective view of one embodiment of the present invention showing a bilumen dam in broken lines;
Figure 6 is a front elevational view of the bilumen dam of the present invention;
Figure 7 is a side elevational view with a partial cutout showing the ground lead wire inserted into the shield terminator and bilumen dam;
Figure 8 is a cross-sectional view taken along lines 8-8 of Figure 7;
Figure 9 is a perspective view of the capped shield terminator of the present invention;
Figure 10 is a front elevational view of the trilumen dam embodiment of the present invention; and
Figure 11 is a perspective view depicting use of the trilumen dam in a chain arrangement.

### Description of the Preferred Embodiment

With reference now to the drawings, and in particular with reference to Figure 1, there is depicted a conventional coaxial cable **10** with a portion of the outer insulating jacket **12** removed, exposing shield section **14**. An annular cut is normally made in the insulating jacket to expose shield section **14**, but it is sufficient to cut a smaller "window" of jacket **12** to expose the cable shield. The conductive shield **14** should be woven conductive filaments, normally braided copper wire which is tinned or silvered for solderability. Some shields are wrap-around aluminum sheeting (aluminized Mylar® foil), but it is difficult to make a solder bond with such material. Also shown is the terminal end **16** of coaxial cable **10**, including inner insulating layer **18** and central wire **20**. Of course, those skilled in the art will appreciate that the present invention is not limited to use on coaxial cables, but may be used in any application requiring electrical connection to an insulated conductor.

Although the conductive shield of coaxial cable **10** may be connected to the electrical ground proximate terminal end **16**, this is often insufficient for sensitive equipment, especially where shorts or lightning strikes are likely to occur. Therefore, grounding of shield section **14** at an intermediate point **15** such as that shown in Figure 1 is often desirable. In anticipation of this requirement, several shield terminators of the present invention may be pre-positioned about coaxial cable **10**, such that they may be conveniently maneuvered along cable **10** to the location of exposed sections **14**.

Referring now to Figures 5 and 6, the shield terminator **22** of the present invention is explained. Shield terminator **22** generally comprises tubular sleeve **24**, prior art dam **26**, solder band **28**, and bilumen dam **30**. Sleeve **24** is constructed of a heat-shrinkable material usually formed from polymeric and elastomeric resins. Suitable thermoelastic materials include flexible polyolefins, polychloroprene, polyvinylidene fluoride, polytetrafluoroethylene and fluoroelastomers. Use of polychloroprene is eschewed, however, as it is not transparent (which is desirable for observation of a proper solder joint), and it does not have the heat stability of the other compounds. These substances typically have a shrink ratio of approximately 2:1, meaning that, in tubular form, they may shrink to 50% of their original diameter. Sleeve **24** may therefore easily slide over cable **10**, and still provide a tight fit around cable **10** after heating.

Sleeve **24** may come in various sizes according to the diameter of the particular cable being grounded. The thermoelastic material comprising sleeve **24** is optionally color-coded according to diameter, length, thermoelastic material, solder type, etc., and may further contain a thermochromic temperature indicator which causes sleeve **24** to change color when an appropriate temperature is applied, namely, the minimum temperature necessary to melt solder band **28** and plasticize dams **26** and **30**.

Dam **26** is a prior art dam, and is essentially a band or ring of thermally stabilized thermoplastic. A material should be chosen which melts when heat (sufficient to melt solder band **28**) is applied, but the material should remain somewhat viscous to preclude escape of any solder from sleeve **24**. The inventor prefers the use of a mixture of ethylene vinyl acetate copolymer and polyvinylidene fluoride. Solder band **28** is also known in the art, and may be any type of tin-lead alloy, with the optional provision of flux. Solder band **28** may be replaced by other fusible bonding materials.

Bilumen dam **30** (shown in Figure 6) is generally constructed of the same material as prior art dam **26**; however, bilumen dam **30** has two separate lumens or holes **32** and **34**. The size of bilumen dam **30** (as well as the size of prior art dam **26** and solder band **28**) depends on the size of cable **10** and sleeve **24**.

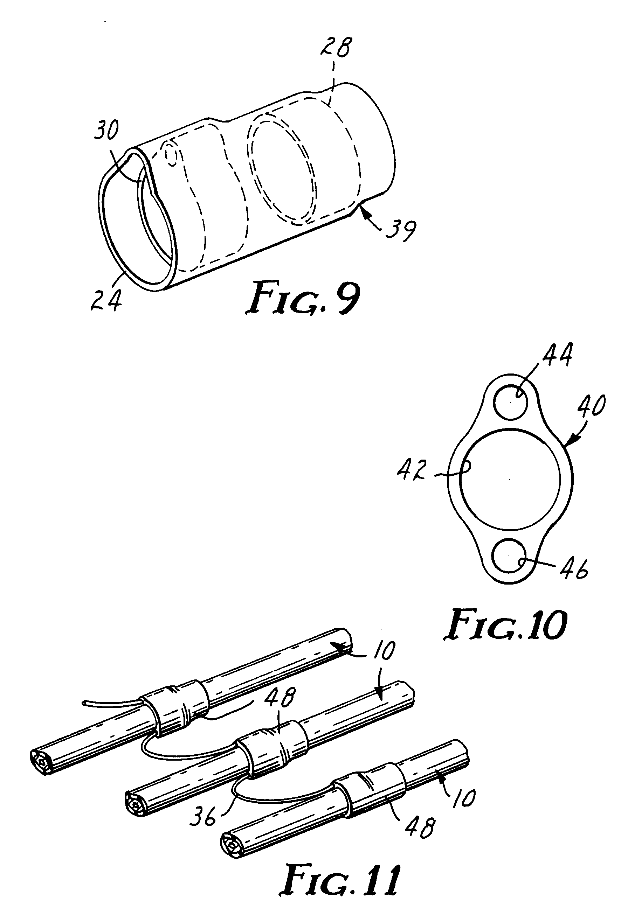

With further reference to Figures 7 and 8, lumen **32** provides for passage of coaxial cable **10**, while lumen **34** accommodates ground lead wire **36**. Figure 7 depicts the placement of ground lead wire **36** through lumen **34**, with the leads **38** of ground lead wire **36** placed adjacent solder band **28**. Figure 8 in turn illustrates how bilumen dam **30** surrounds both ground lead wire **36** and coaxial cable **10**, insuring a complete seal once heat is applied and sleeve **24** shrinks (for clarity, shield **14**, inner insulating layer **18** and lead wire **16** have been omitted from Figure 8). The compression from the sleeve contraction causes bilumen dam **30** to seal about cable jacket **12** and lead wire **36**. Heat may be applied by convection, infrared radiation, or any other convenient method. In addition to providing improved sealing ability, bilumen dam **30** also affords greater strain relief for the electrical connection.

It is contemplated that shield terminator **22** may be sold either with or without ground lead wire **36** in place. In other words, lead wire **36** may be inserted into lumen **34** before packaging, simplifying installation of the device. Also, if a ground connection is desired at the terminal end **16** of cable **10**, rather than at some intermediate segment as heretofore discussed, shield terminator **22** can have a variable diameter, i.e., the diameter of sleeve **24** at prior art dam **26** will be smaller than at bilumen dam **30** in order to fit more tightly around the internal insulating layer **18** of cable **10**. Additionally, if a connection needs to be made to the terminal end of a plain wire such as plastic insulated cable (PIC), rather than on a coaxial cable, then shield terminator **22** may take the form of a cap **39**, such as that shown in Figure 9, having only bilumen dam **30** and solder band **28** therein.

In certain applications, it is necessary to create a "chain" of connected lead wires to guarantee a common ground for several cables. In such a case, it is useful to have two ground lead wires connected to a single cable shield. This arrangement may be facilitated by the use of two bilumen dams **30** in shield terminator **22**, one at each end. Alternatively, a trilumen dam **40**, such as that shown in Figure 10, may be employed. Trilumen dam **40** is simply substituted for bilumen dam **30** in shield terminator **22**. Trilumen dam **40** has a first lumen **42** for passage of cable **10**, and second and third lumens **44** and **46** which receive the two ground lead wires. Figure 11 depicts a chain of cables connected by means of the trilumen dam shield terminators **48**. As those skilled in the art will appreciate, dams having more than three lumens will also be useful where it is necessary to connect more than two ground wires to the cable.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention.

## Claims

1. A device for encapsulating an exposed portion (14) of a conductor in an insulated cable (10) and a lead wire (36), comprising:
heat-shrinkable sleeve means (24) for surrounding the exposed portion of the conductor, said sleeve means having first and second ends;
solder band means (28) for electrically connecting the exposed portion of the conductor to the lead wire (36), said solder band means being within said sleeve means and positioned intermediate said first and second ends thereof: and
a first dam (30) of thermoplastics material, characterised in that:
said first dam (30) has at least two lumens (32, 34), said first dam (30) being positioned within said sleeve means proximate said first end thereof.

2. The device according to claim 1 wherein said first dam (30) has first and second lumens (32), said first lumen (32) having a diameter approximately equal to the diameter of the cable (10), and said second lumen (34) having a diameter approximately equal to the diameter of the lead wire (36).

3. The device according to any preceding claim wherein a second thermoplastic dam (26) is positioned within said sleeve means (24) proximate said second end thereof.

4. The device according to claim 3 wherein said sleeve means (34) is a tubular member formed of thermoelastic material whereby, when the cable (10) is inserted in said tubular member, the lead wire (36) is inserted in said second lumen (34), and heat is applied to the device, said tubular member shrinks tightly about the exposed portion (14) of the conductor, said solder band means (28) melts and connects the lead wire (34) to the exposed portion (14) of the conductor, and said first dam (30) fills interstices between said tubular member (24), the lead wire (36), and the cable (12).

5. The device according to claim 4 wherein said thermoelastic material forming said tubular member is selected from the group consisting of polyolefin, polyvinylidene fluoride, polytetrafluoroethylene or a fluoroelastomer.

6. The device according to claims 3-5 wherein said thermoplastics material forming said first and second dams is a mixture of ethylene vinyl acetate copolymer and polyvinylidene fluoride.

7. The device according to any preceding claim wherein said first dam has a third lumen (46) for receiving another lead wire.

8. The device according to any preceding claim wherein:
said sleeve means (24) comprises a tubular member having first and second ends, said second end being capped, said solder band means (28) being positioned within said tubular member intermediate said first and second ends thereof.

9. A shield terminator for encapsulating an exposed portion of a shield (14) in a coaxial cable (10) and a lead wire (36) adjacent to the exposed portion of the shield, the shield terminator comprising:
a thermoelastic heat shrinkable tubular sleeve (24) having first and second ends;
a solder band (28) positioned within said tubular sleeve (24) intermediate said first and second ends; and
first and second dams (26, 30) of thermoplastics material positioned, respectively, at said first and second ends of said tubular sleeve, characterised by:
said first dam (30) having at least two lumens (32, 34) therein for receiving the cable (10) and the lead wire (36).

10. The shield terminator of claim 9 wherein:
said thermoelastic tubular sleeve (24) is formed of a material selected from the group consisting of polyolefin, polyvinylidene fluoride, polytetrafluoroethylene or a fluoroelastomer; and
said dams are a mixture of ethylene vinyl acetate copolymer and polyvinylidene fluoride.

11. A dam (30) for a shield terminator used to encapsulate an exposed portion (14) of a conductor in an insulated cable (12) and a lead wire (36) adjacent to the exposed portion of the conductor, the dam comprising a ring of thermoplastics material and characterised by having first and second lumens (32, 34) therein, said first lumen (32) having a diameter approximately equal to the diameter of the cable (12), and said lumen (34) having a diameter approximately equal to the diameter of the lead wire (36).

12. The dam of claim 11 wherein said thermoplastics material is a mixture of ethylene vinyl acetate copolymer and polyvinylidene fluoride.

13. A method of manufacturing a shield terminator used to encapsulate an exposed portion (14) of a conductor in an insulated cable (12), a lead wire (36) being adjacent to the exposed portion of the conductor, comprising the steps of:
obtaining a heat-shrinkable sleeve member (24) having first and second ends;
positioning a first dam member (30) of thermoplastics material in said sleeve member proximate said first end;
inserting a solder band means (28) in said sleeve member (24) intermediate said first and second ends, characterised in that:
said first dam member (30) has at least first and second lumens (32, 34) therein, said first lumen (32) having a diameter approximately equal to the diameter of the cable and said second lumen having a diameter approximately equal to the diameter of the lead wire (36).

14. The method of claim 13 further comprising the steps of placing a second dam member (26) in said sleeve member (24) proximate said second end.

15. The method of claim 13 further comprising the step of introducing the lead wire (36) into said second lumen (34) of said first dam member (30).

16. The method of claim 13 further comprising the step of capping said second end of said sleeve member (24).

17. A method of using a thermoelastic shield terminator to connect an exposed portion (14) of a conductor in an insulated cable (12) to a terminal end (38) of a lead wire (36), the shield terminator having at least one dam (30) of thermoplastics material and fusible solder band means (28) therein, comprising the steps of:
locating the fusible solder band means (38) adjacent to the exposed portion of the conductor;
placing the terminal end (38) of the lead wire (36) proximate the fusible solder band means (28); and
heating the shield terminator until the fusible bonding means flows between the lead wire and the exposed portion of the conductor characterised by:
providing said dam as a multilumen dam (30);
prior to said locating step, positioning said shield terminator about said exposed portion (14) of the conductor by inserting the cable through a first lumen (32) of said dam; and
prior to said placing step, inserting said lead wire (36) in a second lumen (34) of said dam.

18. The method of claim 17 further comprising the step of introducing another lead wire into a third lumen (46) of the multilumen dam (40), said introducing step occurring before said heating step.

## Patentansprüche

1. Vorrichtung zur Verkapselung eines unbedeckten Teils (14) eines Stromleiters in einem Isolierdraht (10) und eines Hauptdrahts (36), dadurch gekennzeichnet, daß die Vorrichtung folgendes umfaßt:
eine Schrumpfmuffeneinrichtung (24), zur Umschließung des unbedeckten Teils des Stromleiters, wobei die genannte Muffeneinrichtung ein erstes und ein zweites Ende aufweist;
eine Lötringeinrichtung (28), zur elektrischen Verbindung des unbedeckten Teils des Stromleiters mit dem Hauptdraht (36), wobei sich die genannte Lötringeinrichtung innerhalb der genannten Muffeneinrichtung befindet und sie zwischen deren ersten und zweiten Ende positioniert ist; und
ein erster Damm (30) aus einem thermoplastischen Stoff, dadurch gekennzeichnet, daß:
der genannte erste Damm (30) wenigstens zwei Lumen (32, 34) aufweist, wobei der genannte erste Damm (30) innerhalb der genannten Muffeneinrichtung, nahe deren ersten Ende positioniert ist.

2. Vorrichtung nach Anspruch 1, dadurch gekennzeichnet, daß der genannte erste Damm (30) einen ersten und einen zweiten Lumen (32) aufweist, wobei der genannte erste Lumen (32) einen Durchmesser aufweist, der ungefähr gleich dem Durchmesser des Drahts (10) ist, und wobei der genannte zweite Lumen (34) einen Durchmesser aufweist, der ungefähr gleich dem Durchmesser des Hauptdrahts (36) ist.

3. Vorrichtung nach einem der vorstehenden Ansprüche, dadurch gekennzeichnet, daß ein zweiter thermoplastischer Damm (26) innerhalb der genannten Muffeneinrichtung (24) positioniert ist, und zwar nahe deren zweiten Ende.

4. Vorrichtung nach Anspruch 3, dadurch gekennzeichnet, daß es sich bei der genannten Muffeneinrichtung (24) um ein röhrenförmiges Element handelt, das aus einem thermoelastischen Stoff hergestellt ist, wobei, wenn der Draht (10) in das genannte röhrenförmige Element eingeführt ist, der Hauptdraht (36) in den genannten zweiten Lumen (34) eingeführt ist, und wenn der Vorrichtung Warme zugeführt wird, das genannte röhrenförmige Element eng um den unbedeckten Teil (14) des Stromleiters zusammenschrumpft, wobei die genannte Lötringeinrichtung (28) schmilzt und den Hauptdraht (36) mit dem unbedeckten Teil (14) verbindet, und wobei der genannte erste Damm (30) die Zwischenräume zwischen dem genannten röhrenförmigen Element (24), dem Hauptdraht (36) und dem Draht (12) ausfüllt.

5. Vorrichtung nach Anspruch 4, dadurch gekennzeichnet, daß der genannte thermoelastische Stoff, aus dem das genannte röhrenförmige Element hergestellt ist, aus der Gruppe ausgewählt wird, die folgendes umfaßt: Polyolefin, Polyvinylidenfluorid, Polytetrafluoroethylen oder ein Fluoroelastomer.

6. Vorrichtung nach den Ansprüchen 3-5, dadurch gekennzeichnet, daß der genannte thermoplastische Stoff, aus dem die genannten ersten und zweiten Dämme hergestellt sind, eine Mischung aus Ethylen-Vinylacetat-Copolymerisat und Polyvinylidenfluorid darstellt.

7. Vorrichtung nach einem der vorstehenden Ansprüche, dadurch gekennzeichnet, daß der genannte erste Damm einen dritten Lumen (46) aufweist, zur Aufnahme eines weiteren Hauptdrahts.

8. Vorrichtung nach einem der vorstehenden Ansprüche, dadurch gekennzeichnet, daß die genannte Muffeneinrichtung (24) ein röhrenförmiges Element mit einem ersten und einem zweiten Ende umfaßt, wobei das genannte zweite Ende abgedeckt ist, und wobei die genannte Lötringeinrichtung (28) innerhalb des genannten röhrenförmigen Elements, zwischen dessen genannten ersten und genannten zweiten Ende positioniert ist.

9. Schirmanschluß zur Verkapselung eines unbedeckten Teils einer Abschirmung (14) in einem Koaxialkabel (10) und eines Hauptdrahts (36) neben dem unbedeckten Teil der Abschirmung, dadurch gekennzeichnet, daß der Schirmanschluß folgendes umfaßt:
eine thermoelastische, röhrenförmige Schrumpfmuffe (24), die ein erstes und ein zweites Ende aufweist;
einen Lötring (28), der innerhalb der röhrenförmigen Schrumpfmuffe (24), zwischen dem genannten ersten und dem genannten zweiten Ende positioniert ist; und
einen ersten und einen zweiten Damm (26, 30) aus einem thermoplastischen Stoff, wobei die Dämme entsprechend an dem ersten und dem zweiten Ende der genannten röhrenförmigen Muffe positioniert sind, dadurch gekennzeichnet, daß:
der genannte erste Damm (30) darin mindestens zwei Lumen (32, 34) aufweist, zur Aufnahme des Kabels (10) und des Hauptdrahts (36).

10. Schirmanschluß nach Anspruch 9, dadurch gekennzeichnet, daß:
die genannte thermoelastische, röhrenförmige Muffe (24) aus einem Stoff hergestellt ist, der aus der folgenden Gruppe ausgewählt wird: Polyolefin, Polyvinylidenfluorid, Polytetrafluorethylen oder ein Fluorelastomer; und
die genannten Dämme eine Mischung aus Ethylen-Vinylacetat-Copolimerisat und Polyvinylidenfluorid darstellen.

11. Damm für einen Schirmanschluß, der zur Verkapselung eines unbedeckten Teils (14) eines Stromleiters in einem Isolierdraht (12) verwendet wird und eines Hauptdrahts (36) neben dem unbedeckten Teil des Stromleiters, wobei der Damm einen Ring aus einem thermoplastischen Stoff umfaßt, und dadurch gekennzeichnet, daß dieser darin einen ersten und zweiten Lumen (32, 34) aufweist, wobei der genannte erste Lumen (32) einen Durchmesser aufweist, der ungefähr gleich dem Durchmesser des Drahts (12) ist, und wobei der genannte Lumen (34) einen Durchmesser aufweist, der ungefähr gleich dem Durchmesser des Hauptdrahts (36) ist.

12. Damm nach Anspruch 11, dadurch gekennzeichnet, daß es sich bei dem thermoplastischen Stoff um eine Mischung aus Ethylen-Vinylacetat-Copolimerisat und Polyvinylidenfluorid handelt.

13. Verfahren zur Herstellung eines Schirmanschlusses, der zur Verkapselung eine unbedeckten Teils (14) eines Stromleiters in einem Isolierdraht (12) verwendet wird und eines Hauptdrahts (36) neben dem unbedeckten Teil des Stromleiters, dadurch gekennzeichnet, daß das Verfahren die folgenden Schritte umfaßt:
Bereitstellung eines Schrumpfmuffenelements (24), das ein erstes und ein zweites Ende aufweist;
Positionierung eines ersten Dammelements (30) aus einem thermoplastischen Stoff in dem genannten Muffenelement, nahe dem genannten ersten Ende;
Einführung einer Lötringeinrichtung (28) in das genannte Muffenelement (24), zwischen dem genannten ersten und dem genannten zweiten Ende, dadurch gekennzeichnet, daß:
das genannte erste Dammelement (30) darin mindestens einen ersten und einen zweiten Lumen (32, 34) umfaßt, wobei der genannte erste Lumen (32) einen Durchmesser aufweist, der ungefähr gleich dem Durchmesser des Drahts ist, und wobei der genannte zweite Lumen einen Durchmesser aufweist, der ungefähr gleich dem Durchmesser des Hauptdrahts (36) ist.

14. Verfahren nach Anspruch 13, ferner den Schritt umfassend, bei dem ein zweites Dammelement (26) in dem genannten Muffenelement (34) nahe dem genannten zweiten Ende positioniert wird.

15. Verfahren nach Anspruch 13, ferner den Schritt umfassend, bei dem der Hauptdraht (36) in den genannten zweiten Lumen (34) des genannten ersten Dammelements (30) eingeführt wird.

16. Verfahren nach Anspruch 13, ferner den Schritt umfassend, bei dem das genannte zweite Ende des genannten Muffenelements (24) abgedeckt wird.

17. Verfahren der Verwendung eines thermoelastischen Schirmanschlusses zur Verbindung eines unbedeckten Teils (14) eines Stromleiters in einem Isolierdraht (12), mit einem Anschlußende (38) eines Hauptdrahts (36), dadurch gekennzeichnet, daß der Schirmanschluß mindestens einen Damm (30) aus einem thermoplastischen Stoff aufweist und eine schmelzbare Lötringeinrichtung (28) darin, dadurch gekennzeichnet, daß das Verfahren die folgenden Schritte umfaßt:
Plazierung der schmelzbaren Lötringeinrichtung (38) neben dem unbedeckten Teil des Stromleiters;
Positionierung des Anschlußendes (38) des Hauptdrahts (36) nahe der schmelzbaren Lötringeinrichtung (28); und
Erwärmung des Schirmanschlusses, bis die schmelzbare Verbindungseinrichtung zwischen dem Hauptdraht und dem unbedeckten Teil des Stromleiters fließt, dadurch gekennzeichnet, daß:
der genannte Damm als Mehrfachlumen-Damm (30) bereitgestellt wird;
vor dem genannten Plazierungsschritt, der genannte Schirmanschluß um den genannten unbedeckten Teil (14) des Stromleiters positioniert wird, und zwar dadurch, daß der Draht durch einen ersten Lumen (32) des genannten Damms eingeführt wird; und
vor dem genannten Positionierungsschritt, der genannte Hauptdraht (36) in einen zweiten Lumen (34) des genannten Damms eingeführt wird.

18. Verfahren nach Anspruch 17, ferner den Schritt umfassend, bei dem ein weiterer Hauptdraht in einen dritten Lumen (46) des Mehrfachlumen-Damms (40) eingeführt wird, dadurch gekennzeichnet, daß der genannte Einführungsschritt vor dem genannten Erwärmungsschritt auftritt.

## Revendications

1. Dispositif pour encapsuler une partie mise à nu (14) d'un conducteur dans un câble isolé (10) et un fil de connexion (36), comprenant :
un moyen de gaine thermorétrécissable (24) pour entourer la partie mise à nu du conducteur, ledit moyen de gaine comportant des première et seconde extrémités ;
un moyen de bande de soudure (28) pour connecter électriquement la partie mise à nu du conducteur au fil de connexion (36), ledit moyen de bande de soudure étant à l'intérieur dudit moyen de gaine et étant positionné en une position intermédiaire par rapport à ses dites première et seconde extrémités ; et
un premier barrage (30) en un matériau thermoplastique,
caractérisé en ce que :
ledit premier barrage (30) comporte au moins deux lumières (32, 34), ledit premier barrage (30) étant positionné à l'intérieur dudit moyen de gaine à proximité de sa dite première extrémité.

2. Dispositif selon la revendication 1, dans lequel ledit premier barrage (30) comporte des première et seconde lumières (32), ladite première lumière (32) présentant un diamètre approximativement égal au diamètre du câble (10) et ladite seconde lumière (34) présentant un diamètre approximativement égal au diamètre du fil de connexion (36).

3. Dispositif selon l'une quelconque des revendications précédentes, dans lequel un second barrage en un matériau thermoplastique (26) est positionné dans ledit moyen de gaine (24) à proximité de sa dite seconde extrémité.

4. Dispositif selon la revendication 3, dans lequel ledit moyen de gaine (34) est un élément tubulaire réalisé en un matériau thermoplastique, de telle sorte que, lorsque le câble (10) est inséré dans ledit élément tubulaire, le fil de connexion (36) soit inséré dans ladite seconde lumière (34) et que, lorsque de la chaleur est appliquée au dispositif, ledit élément tubulaire rétrécisse de façon à se serrer autour de la partie mise à nu (14) du conducteur, ledit moyen de bande de soudure (28) fonde et connecte le fil de connexion (34) à la partie mise à nu (14) du conducteur et ledit premier barrage (30) remplisse des interstices situés entre ledit élément tubulaire (24), le fil de connexion (36) et le câble (12).

5. Dispositif selon la revendication 4, dans lequel ledit matériau thermoplastique qui forme ledit élément tubulaire est choisi dans le groupe comprenant un polyoléfine, un fluorure de polyvinylidène, un polytétrafluoréthylène et un fluoroélastomère.

6. Dispositif selon les revendications 3 à 5, dans lequel ledit matériau thermoplastique qui forme lesdits premier et second barrages est un mélange d'un copolymère éthylène - acétate de vinyle et d'un fluorure de polyvinylidène.

7. Dispositif selon l'une quelconque des revendications précédentes, dans lequel ledit premier barrage comporte une troisième lumière (46) destinée à recevoir un autre fil de connexion.

8. Dispositif selon l'une quelconque des revendications précédentes, dans lequel :
ledit moyen de gaine (24) comprend un élément tubulaire comportant des première et seconde extrémités, ladite seconde extrémité étant couronnée, ledit moyen de bande de soudure (28) étant positionné dans ledit élément tubulaire en une position intermédiaire par rapport à ses dites première et seconde extrémités.

9. Elément de terminaison de blindage pour encapsuler une partie mise à nu d'un blindage (14) dans un câble coaxial (10) et un fil de connexion (36) adjacent à la partie mise à nu du blindage, l'élément de terminaison de blindage comprenant :
une gaine tubulaire thermoélastique thermorétrécissable (24) comportant des première et seconde extrémités ;
une bande de soudure (28) positionnée dans ladite gaine tubulaire (24) en une position intermédiaire par rapport auxdites première et seconde extrémités ; et
des premier et second barrages (26, 30) en un matériau thermoplastique positionnés respectivement au niveau desdites première et seconde extrémités de ladite gaine tubulaire,
caractérisé en ce que :
ledit premier barrage (30) comporte au moins deux lumières (32, 34) ménagées en son sein pour recevoir ledit câble (10) et le fil de connexion (36).

10. Elément de terminaison de blindage selon la revendicatif 9, dans lequel :
ladite gaine tubulaire thermoélastique (24) est réalisée en un matériau choisi dans le groupe comprenant un polyoléfine, un fluorure de polyvinylidène, un polytétrafluoréthylène et un fluoroélastomère ; et
lesdits barrages sont en un mélange d'un copolymère éthylène acétate de vinyle et d'un fluorure de polyvinylidène.

11. Barrage (30) pour un élément de terminaison de blindage utilisé pour encapsuler une partie mise à nu (14) d'un conducteur dans un câble isolé (12) et un fil de connexion (36) adjacent à la partie mise à nu du conducteur, le barrage comprenant une bague en un matériau thermoplastique, caractérisé en ce qu'il comporte des première et seconde lumières (32, 34) ménagées en son sein, ladite première lumière (32) présentant un diamètre approximativement égal au diamètre du câble (12) et ladite seconde lumière (34) présentant un diamètre approximativement égal au diamètre du fil de connexion (36).

12. Barrage selon la revendication 11, dans lequel ledit matériau thermoplastique est un mélange d'un copolymère éthylène acétate de vinyle et d'un fluorure de polyvinylidène.

13. Procédé de fabrication d'un élément de terminaison blindé utilisé pour encapsuler une partie mise à nu (14) d'un conducteur dans un câble isolé (12), un fil de connexion (36) étant adjacent à la partie mise à nu du conducteur, comprenant les étapes de :
obtention d'un élément de gaine thermorétrécissable (24) comportant des première et seconde extrémités ;
positionnement d'un premier élément de barrage (30) en un matériau thermoplastique dans ledit élément de gaine à proximité de ladite première extrémité ;
insertion d'un moyen de bande de soudure (28) dans ledit élément de gaine (24) en une position intermédiaire par rapport auxdites première et seconde extrémités,
caractérisé en ce que :
ledit premier élément de barrage (30) comporte au moins des première et seconde lumières (32, 34) ménagées en son sein, ladite première lumière (32) présentant un diamètre approximativement égal au diamètre du câble et ladite seconde lumière présentant un diamètre approximativement égal au diamètre du fil de connexion (36).

14. Procédé selon la revendication 13, comprenant en outre les étapes de placement d'un second élément de barrage (26) dans ledit élément de gaine (24) à proximité de ladite seconde extrémité.

15. Procédé selon la revendication 13, comprenant en outre l'étape d'introduction du fil de connexion (36) dans ladite seconde lumière (34) dudit premier élément de barrage (30).

16. Procédé selon la revendication 13, comprenant en outre l'étape de couronnement de ladite seconde extrémité dudit élément de gaine (24).

17. Procédé d'utilisation d'un élément de terminaison de blindage thermoélastique pour connecter une partie mise à nu (14) d'un conducteur dans un câble isolé (12) à une extrémité terminale (38) d'un fil de connexion (36), l'élément de terminaison de blindage comportant au moins un barrage (30) en un matériau thermoplastique et un moyen de bande de soudure fusible (28) en son sein, comprenant les étapes de :
positionnement du moyen de bande de soudure fusible (38) en une position adjacente à la partie mise à nu du conducteur ;
placement de l'extrémité terminale (38) du fil de connexion (36) à proximité du moyen de bande de soudure fusible (28) ; et
chauffage de l'élément de terminaison de blindage jusqu'à ce que le moyen de liaison fusible flue entre le fil de connexion et la partie mise à nu du conducteur,
caractérisé par :
la fourniture dudit barrage en tant que barrage à multiples lumières (30) ;
avant ladite étape de positionnement, positionnement dudit élément de terminaison de blindage autour de ladite partie mise à nu (14) du conducteur au moyen de l'insertion du câble au travers d'une première lumière (32) dudit barrage ; et
avant ladite étape de placement, insertion dudit fil de connexion (36) dans une seconde lumière (34) dudit barrage.

18. Procédé selon la revendication 17, comprenant en outre l'étape d'introduction d'un autre fil de connexion dans une troisième lumière (46) du barrage à multiples lumières (40), ladite étape d'introduction survenant avant ladite étape de chauffage.
